# EUROPÄISCHE PATENTSCHRIFT

(11) **EP 2 005 142 B1**
(45) Veröffentlichungstag und Bekanntmachung des Hinweises auf die Patenterteilung: **04.12.2013**
(21) Anmeldenummer: 07727944.6
(22) Anmeldetag: 10.04.2007
(51) Int. Cl.: G01N 21/27, G01J 3/02, G01J 3/42

(54) **VERFAHREN UND VORRICHTUNG ZUR MESSUNG DER OPTISCHEN ABSORPTION VON PROBEN**
METHOD AND APPARATUS FOR MEASURING THE OPTICAL ABSORPTION OF SAMPLES
PROCÉDÉ ET DISPOSITIF DE MESURE DE L'ABSORPTION OPTIQUE D'ÉCHANTILLONS

(30) Priorität: 07.04.2006 DE 102006016855
(43) Veröffentlichungstag der Anmeldung: 24.12.2008
(73) Patentinhaber: Emerson Process Management GmbH & Co. OHG, 82234 Wessling (DE)
(72) Erfinder: RANDOW, Albert, 63486 Bruchkoebel (DE); DANDL, Helmut, 85072 Eichstätt (DE); KRAUSE, Hans, 61231 Bad Nauheim (DE)
(74) Vertreter: Haar, Lucas Heinz Jörn
(86) Internationale Anmeldenummer: PCT/EP2007/053476
(87) Internationale Veröffentlichungsnummer: WO 2007/116066

(56) Entgegenhaltungen:
- EP-A- 0 290 657
- DD-A1- 234 928
- DE-A1- 10 062 126
- DE-A1- 19 751 819
- US-A- 4 008 394

## Beschreibung

Die Erfindung betrifft ein Verfahren zur Messung der optischen Absorption von Proben gemäß dem Oberbegriff des Anspruchs 1. Die Erfindung betrifft weiterhin eine Vorrichtung zur Messung der optischen Absorption von Proben gemäß dem Oberbegriff des Anspruchs 7.

Aus DE 26 14 181 C3 ist ein Verfahren der angegebenen Art und eine Vorrichtung zur Durchführung des Verfahrens bekannt. Bei diesem bekannten Verfahren wird die transmittierte Strahlung der zu untersuchenden Probe und der Referenzprobe abwechselnd auf den Wandler gelenkt und aus den voneinander getrennten Wandlersignalen ein Differenzsignal gebildet. Außerdem werden während eines Bruchteils einer Umdrehung der Chopperscheibe Probe und Referenzprobe gleichzeitig durchstrahlt und danach gleichzeitig abgeschattet, so dass ein zusätzliches Großsignal entsteht. Dieses Großsignal wird elektronisch ausgetaktet und mit dem eigentlichen Signal verrechnet. Es dient zur Kalibrierung und Kompensation von Empfindlichkeitsdrift des optischen Aufbaus, beispielsweise einer Intensitätsänderung des Strahlers. Dieses bekannte Verfahren und nach dem Verfahren arbeitende Geräte haben sich in der Praxis bewährt. Das Verfahren zeigt jedoch eine gewisse Temperaturabhängigkeit, Nullpunktsabhängigkeit sowie eine starke Linearitätsabweichung des Messsignals, welches den Signalverarbeitungsaufwand erhöht und die Signaldiagnose erschwert.

Aus DD-A-234 928 ist ein Zweistrahl-Fotometer nach dem Differenzverfahren mit geregeltem Pilotsignal bekannt, bei welchem im Strahlengang zwischen einer Strahlungsquelle und einem Strahlungsempfänger eine geteilte Küvette mit einer Mess- und einer Vergleichskammer und einer dieser zugeordneten Dreispur-Chopperscheibe angeordnet sind. Die Dreispur-Chopperscheibe erzeugt ein Messsignal als Differenzsignal aus gleichen Anteilen der Strahlung durch die Vergleichsküvette und durch die Messküvette und ein Pilotsignal anderer Frequenz. Die Chopperscheibe ist hierbei so gestaltet, dass die Strahlungsintensität der durch die Messküvette gehenden und der durch die Vergleichsküvette gehenden Strahlung bei der Konzentration Null des Messmediums in der Messküvette das Messsignal ebenfalls Null ist. Erreicht wird dies dadurch, dass die Trennwand in der zylindrischen Küvette etwa um die halbe Breite der Pilotenspur von der Mitte entfernt in Richtung der Messküvette angeordnet ist und das Pilotsignal ausschließlich aus Strahlungsteilen, die durch die Vergleichsküvette gehen, gebildet ist. Das Messsignal ist auch hierbei vom Nullpunkt und Temperaturänderungen abhängig.

Aus US-A-4,008,394 ist ein Zweistrahlabsorptionsgasanalysator bekannt, bei welchem im Strahlengang zwischen einer Strahlungsquelle und einem Strahlungsdetektor eine zu untersuchende Probe und eine Referenzprobe ausnehmende, geteilte Küvette und eine von einem Motor angetriebene Chopperscheibe angeordnet sind. Das elektrische Ausgangssignal des Detektors wird von einer phasenempfindlichen Trennanordnung, die von einem an der Chopperscheibe angeordneten Phasendetektor nach Probe einerseits und Referenzprobe andererseits getrennte Phasenreferenzsignale erhält, in ein der zu untersuchenden Probe zugeordnetes Messsignal und ein der Referenzprobe zugeordnetes Referenzsignal getrennt. Zur Auswertung kann eine algebraische Differenz von Messsignal und Referenzsignal oder das Verhältnis von Messsignal geteilt durch das Referenzsignal gebildet werden, letzteres soll den Einfluss von Veränderungen der Strahlungsquellenintensität, der Verstärkung des Vorverstärkers, der Dämpfung im optischen Pfad und andere Komponenten eliminieren.

Der Erfindung liegt die Aufgabe zugrunde, ein Verfahren der eingangs genannten Art anzugeben, welches sich durch eine besonders geringe Temperaturabhängigkeit, eine gute Nullpunktstabilität und eine geringe Linearitätsabweichung des Messsignals auszeichnet. Es ist weiterhin Aufgabe der Erfindung, eine vorteilhafte Vorrichtung zur Durchführung des Verfahrens zu schaffen.

Die Aufgabe wird hinsichtlich des Verfahrens durch die in Patentanspruch 1 angegebenen Merkmale und hinsichtlich der Vorrichtung durch die in Patentanspruch 7 angegebenen Merkmale gelöst. Vorteilhafte Ausgestaltungen des Verfahrens und der Vorrichtung sind in den den genannten Ansprüchen jeweils zugeordneten Unteransprüchen angegeben.

Bei dem Verfahren nach der Erfindung wird Licht einer Strahlungsquelle auf eine zu untersuchende Probe und auf eine Referenzprobe gelenkt, das die zu untersuchende Probe transmittierende Licht mit einer ersten Frequenz und das die Referenzprobe transmittierende Licht mit einer zweiten Frequenz moduliert, die transmittierte Strahlung der zu untersuchenden Probe und der Referenzprobe mittels eines fotoelektrischen Wandlers in ein elektrisches Mischsignal umgesetzt, das elektrische Mischsignal von einem an den fotoelektrischen Wandler angeschlossenen Vorverstärker verstärkt, in einem Analog-Digital Wandler in ein digitales Mischsignal umgesetzt und das digitale Mischsignal unter Anwendung eines digitalen Lock-in-Verstärkers nach der ersten Frequenz in ein der zu untersuchenden Probe zugeordnetes Messsignal und nach der zweiten Frequenz in ein der Referenzprobe zugeordnetes Referenzsignal getrennt, indem aus dem Mischsignal durch Vergleich mit der dem Referenzsignal unterlagerten Sinusfrequenz die Phasenlage und Frequenz des dem Referenzsignal entsprechenden Signalanteils definiert und aus Phasenlage und Frequenz des Referenzsignals die Phasenlage und Frequenz des dem Messsignal entsprechenden Signalanteils des Mischsignals abgeleitet wird und der Quotient aus dem Referenzsignal und dem Messsignal als Maß für die Konzentration der zu untersuchenden Probe in der Weise gebildet wird, dass die Verringerung der Strahlungsintensität durch Absorption zu einer Erhöhung der Empfindlichkeit führt, so dass sich ein annähernd lineares Ansprechverhalten ergibt.

Das erfindungsgemäße Verfahren hat den Vorteil, dass es eine hohe Temperaturstabilität ermöglicht. Änderungen der Strahlungsintensität des Strahlers wirken sich auf der Proben- und Referenzprobenseite gleichermaßen aus und werden durch die Quotientenbildung gegeneinander aufgehoben. Entsprechendes gilt für eventuell störende Einflüsse der Signalverarbeitung, die sich Aufheben, da beide Signalanteile den gleichen Signalverarbeitungspfad durchlaufen. Ein weiterer Vorteil des erfindungsgemäßen Verfahrens ist eine erheblich verbesserte Linearität des gewonnenen Konzentrationssignals und damit verbunden eine wesentliche Erleichterung der Signalauswertung. Dies hat zur Folge, dass beispielsweise die Konzentrationsbestimmung von CO2 in allen in Frage kommenden Messbereichen mit nur zwei Küvettenlängen abgedeckt werden kann. Auch die Nullpunktstabilität des Verfahrens ist außerordentlich gut. Es hat sich weiterhin gezeigt, dass das erfindungsgemäße Verfahren eine hohe Messempfindlichkeit ermöglicht und dass ein sehr großer dynamischer Messbereich, beispielsweise von 1 bis 1.000, erzielt werden kann.

Nach einem weiteren Vorschlag der Erfindung kann vorgesehen sein, temperaturbedingte Einflüsse auf das Messsignal und das Referenzsignal für jedes der beiden Signale getrennt auszugleichen. Auf diese Weise können sich einseitig auswirkende Temperatureinflüsse berücksichtigt werden. Weiterhin kann vorgesehen sein, dass die Unterschiedlichkeit der Temperatureinflüsse mit einem nur auf das Messsignal wirkenden temperaturabhängigen Normierungsglied ausgeglichen wird. Im Allgemeinen wird man jedoch versuchen, den Temperaturgang auf der Seite der zu untersuchenden Probe und auf der Seite der Referenzprobe durch geeignete bauliche Maßnahmen gleich zu halten, so dass Maßnahmen zum Temperaturausgleich entbehrlich sind.

Zur Nullpunktjustierung ist nach einem weiteren Vorschlag der Erfindung vorgesehen, dass bei einer Messung mit Nullgas auf der Probenseite das Messsignal durch einen variablen Korrekturfaktor der Auswerteschaltung derart eingestellt wird, dass der Quotient aus Referenzsignal und Messsignal 1 ist. Die Bestimmung des Nullpunkts erfolgt dann rein rechnerisch durch die Subtraktion von 1.

Eine erfindungsgemäße Vorrichtung zur Durchführung des Verfahrens umfasst eine Lichtquelle, einen fotoelektrischen Wandler, der ein analoges elektrisches Mischsignal erzeugt, einen zwischen der Lichtquelle und dem Wandler verlaufenden Messstrahlengang zum Anordnen einer zu untersuchenden Probe, einen zwischen der Lichtquelle und dem Wandler verlaufenden Referenzstrahlengang zum Anordnen einer Referenzprobe, eine motorgetriebene Chopperscheibe mit einer ersten Anzahl, nur den Messstrahlengang freigebenden ersten Öffnungen und einer zweiten Anzahl nur den Referenzstrahlengang freigebenden zweiten Öffnungen, einen an den Wandler angeschlossenen Vorverstärker, einen an den Vorverstärker angeschlossenen Analog-DigitalWandler, der das analoge elektrische Mischsignal in ein digitales elektrisches Mischsignal umwandelt, einen an den Ausgang des Analog-Digital-Wandlers angeschlossenen, digitalen Lock-In-Verstärker, durch den das digitale elektrische Mischsignal nach der ersten Frequenz in ein der zu untersuchenden Probe zugeordnetes Messsignal, das der von dem Wandler (8) erfassten transmittierten Intensität des Messstrahlengangs entspricht, und nach der zweiten Frequenz in ein der Referenzprobe zugeordnetes Referenzsignal, das der von dem Wandler (8) erfassten transmittierten Intensität des Referenzstrahlengangs entspricht, getrennt wird, indem aus dem Mischsignal durch Vergleich mit der dem Referenzsignal unterlagerten Sinusfrequenz die Phasenlage und Frequenz des dem Referenzsignal entsprechenden Signalanteils definiert und aus Phasenlage und Frequenz des Referenzsignals die Phasenlage und Frequenz des dem Messsignal entsprechenden Signalanteils des Mischsignals abgeleitet wird, und eine Auswerteschaltung zur Bildung des Quotienten aus einem der transmittierten Intensität des Referenzstrahlengangs entsprechenden Referenzsignal im Zähler und einem der transmittierten Intensität des Messstrahlengangs entsprechenden Messsignal im Nenner, so dass die Verringerung der Strahlungsintensität durch Absorption zu einer Erhöhung der Empfindlichkeit führt. Weiterhin kann die Vorrichtung ein Normierungsglied, um Temperatureinflüsse auf die Signale zu kompensieren, und eine Anzeigevorrichtung zur Anzeige und/oder Weiterleitung eines dem errechneten Quotienten zugeordneten Wertes umfassen. Der Lock-in-Verstärker kann selbstsynchronisierend sein und/oder eine Synchronisiereinrichtung zur Synchronisation des Lock-In-Verstärkers mit der Chopperscheibe aufweisen.

Die Erfindung wird nachfolgend anhand eines bevorzugten Ausführungsbeispiels näher erläutert. Es zeigen:
- Figur 1: einen Längsschnitt durch den optischen Teil eines Gasanalysegeräts nach einem bevorzugten Ausführungsbeispiel der Erfindung und ein Blockschaltbild der elektronischen Signalverarbeitung und
- Figur 2: eine abgewandelte Ausführung des Gasanalysegerätes gemäß Figur 1.

Der optische Teil des Gasanalysegeräts umfasst einen Strahler 1, eine geteilte Filterküvette 2, eine Messküvette 3, die in eine Messkammer 4 und eine Referenzkammer 5 unterteilt ist, eine Filterküvette 6 und einen Detektor 7 mit einem fotoelektrischen Wandler 8. Der Strahler 1 kann je nach Anwendung zur Erzeugung infraroter, sichtbarer oder ultravioletter Strahlung eingerichtet sein. Die Messkammer 4 der Messküvette 3 ist mit Anschlussleitungen 9 zum Zuführen und Abführen von Gasproben versehen. Die Referenzkammer 5 und die Filterküvetten 2, 6 sind mit für die jeweilige Anwendung geeigneten Gasen dauerhaft gefüllt.

Zwischen dem Strahler 1 und der Filterküvette 2 ist eine Chopperscheibe 10 angeordnet, die um eine Achse 11 drehbar und durch einen Motor 12 mit einer konstanten Drehzahl antreibbar ist. Die Chopperscheibe 10 hat zwei konzentrische, kreisringförmige Zonen 13, 14. Die äußere Zone 13 liegt in dem auf die Messkammer gelenkten Messstrahlengang und die innere Zone 14 in dem auf die Referenzkammer gelenkten Referenzstrahlengang. Beide Zonen 13, 14 sind mit einer Anzahl von in regelmäßigen Abständen angeordneten Öffnungen 15, 16 versehen, die durch geschlossene, den Strahlengang abschattende Abschnitte voneinander getrennt sind. Die Öffnungen 15, 16 haben die Form eines Kreisringsektors. Die Größe der Öffnungen ist so bemessen, dass die Summe der Zentriwinkel der Öffnungen 15 der äußeren Zone 13 gleich der Summe der Zentriwinkel der Öffnungen 16 der inneren Zone 14 ist. Die Zahl der Öffnungen 15, 16 ist in den beiden Zonen 13, 14 jedoch verschieden. Beispielsweise können in der Zone 13 fünf Öffnungen 15 und in der Zone 14 vier Öffnungen 16 vorgesehen sein. Der Chopperscheibe 10 weist ferner einen Drehwinkelgeber auf, der von einem Sensor 17 abgetastet wird. Das Sensorsignal wird zur Erfassung der Winkelgeschwindigkeit von einer zeitgesteuerten Regeleinrichtung 28 verarbeitet, welche die Drehzahl des Motors 10 auf einem einstellbaren Wert konstant hält. Die Synchronisation kann jedoch auch aus dem Signal selbst gewonnen werden, so dass eine Synchronisationseinrichtung mit Sensor entfällt.

Zur Verarbeitung des von dem Wandler 8 erzeugten elektrischen Signals ist an den Wandler 8 eine elektronische Signalverarbeitung 18 angeschlossen, die im Wesentlichen einen Vorverstärker 19, einen Analog-Digital-Wandler 20, einen digitalen Lock-in-Verstärker 21 mit im Zeitmultiplexverfahren ausführbaren Algorithmen, Justier- und Normierglieder 24, 25 und einen Auswerterechner 26 umfasst. Das von dem Auswerterechner 26 ausgegebene digitale Signal wird in einer Anzeigevorrichtung 27 angezeigt und/oder an Datenerfassungssysteme weitergeleitet.

Die Arbeitsweise des beschriebenen Gasanalysegeräts ist folgende:

Das von dem Strahler 1 ausgestrahlte Licht wird von der mit konstanter Winkelgeschwindigkeit drehenden Chopperscheibe 10 mit einer durch die Öffnungen 15 modulierten ersten Frequenz in die Messkammer 4 und mit einer durch die Öffnungen 16 modulierten zweiten Frequenz in die Referenzkammer 5 gelenkt. Der Detektor 7 erfasst die transmittierte Strahlungsintensität der in der Messkammer befindlichen Probe und die Strahlungsintensität der in der Referenzkammer befindlichen Referenzprobe mit der jeweils modulierten Frequenz.

Der Wandler 8 des Detektors 7 erzeugt ein den empfangenen Strahlungsintensitäten entsprechendes elektrisches Mischsignal, welches aus beiden Frequenzanteilen zusammengesetzt ist. Das Mischsignal wird von dem Vorverstärker 19 verstärkt und in dem A/D-Wandler 20 in ein dem digitalen Lock-in-Verstärker- 21 zugeführtes digitales Mischsignal umgewandelt. Bei der Digitalisierung wird eine konstante Abtastfrequenz verwendet, die zusammen mit den Frequenzen des Mess- und Referenzsignals zu Mischfrequenzen führt. Die Abtastfrequenz des A/D-Wandlers 20 soll mindestens 2,5 mal größer sein als die größte durch die Drehung der Chopperscheibe 10 erzeugte Signalfrequenz; vorzugsweise wird eine hohe Abtastfrequenz gewählt. Um Schwebungen der Mischfrequenzen zu vermeiden, kann eine asynchrone Abtastfrequenz verwendet werden. Hierbei muss die asynchrone Abtastfrequenz von den Frequenzen der Chopperscheibe und den ganzzahligen Vielfachen der Frequenzen der Chopperscheibe einen Frequenzabstand haben, der größer ist als die Bandbreite der Messung, d.h. die Asynchronität muss so gewählt werden, dass die Mischfrequenzen sich aus dem Messergebnis herausmitteln.

Der digitale Lock-in-Verstärker enthält eine Recheneinheit, beispielsweise einen Signalverarbeitungsprozessor, der verschiedene mathematische Operationen gleichzeitig oder zumindest im schnellen Wechsel zeitlich verzahnt ausführt. Der Lock-in-Verstärker ist so programmiert, dass eine Trennung der in dem zugeführten digitalen Mischsignal enthaltenen Signalanteile nach ihrer jeweiligen Frequenz erfolgt. Hierbei wird nach einem ersten Algorithmus aus dem Mischsignal durch Vergleich mit der dem Referenzsignal unterlagerten Sinusfrequenz die Phasenlage und Frequenz des dem Referenzsignal entsprechenden Signalanteils definiert. Nach einem zweiten Algorithmus wird aus Phasenlage und Frequenz des Referenzsignals die Phasenlage und Frequenz des dem Messsignal entsprechenden Signalanteils des Mischsignals abgeleitet. Dies hat den Vorteil, dass die Phasennachführung des Messsignals auch erfolgen kann, wenn das Messsignal aufgrund hoher Absoption sehr klein ist. Auf die beschriebene Weise werden die n dem Mischsignal enthaltenen Signalanteile nach ihrer jeweiligen Frequenz in ein Messsignal und in ein Referenzsignal getrennt. Ein Ausgang 22 des Lock-in-Verstärkers 21 liefert somit ein Messsignal, das der von der Probe transmittierten Strahlungsintensität entspricht, und der zweite Ausgang 23 des Lock-in-Verstärkers 21 liefert ein Referenzsignal, das der von der Referenzprobe transmittierten Strahlungsintensität entspricht. Messsignal und Referenzsignal werden in den nachfolgenden Justier- und Normiergliedern 24, 25 zum Ausgleich eventuell vorhandener geringer Unterschiede im Temperaturgang zwischen Mess- und Referenzseite justiert und mit einem einstellbaren Korrekturfaktor so normiert, dass der Quotient aus Referenzsignal im Zähler und Messsignal im Nenner den Wert 1 ergibt. Die Errechnung des Quotienten und Nullpunktkorrektur erfolgt in dem Auswerterechner 26 der auch weitere Korrekturen des Signals zum Ausgleich von Druckunterschieden und Querempfindlichkeit ermöglichen kann.

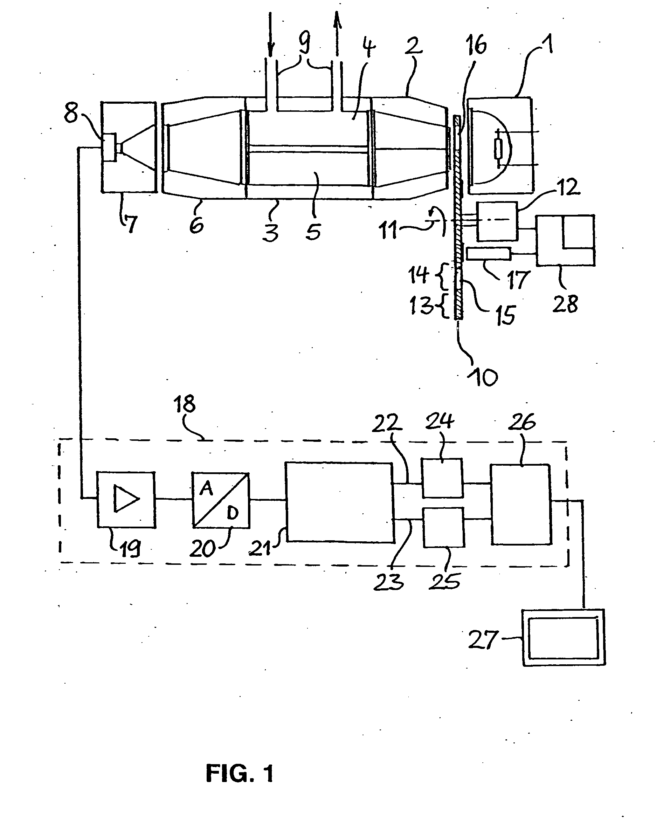

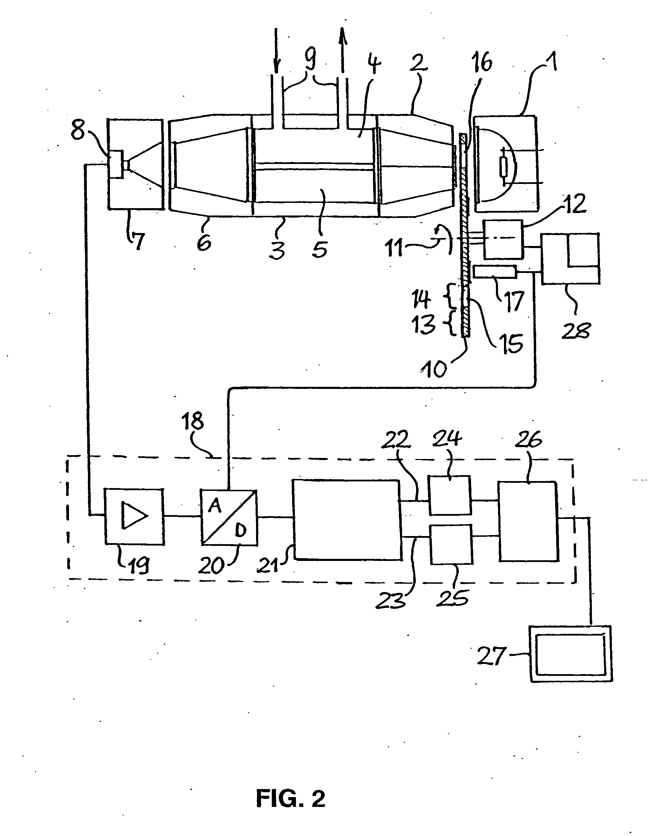

Bei der in Figur 2 gezeigten Abwandlung des Gasanalysegeräts gemäß Figur 1 wird dem A/D-Wandler 20 das von dem Sensor 17 erfasste Drehwinkelsignal der Chopperscheibe 10 zugeführt. Der A/D-Wandler 20 ist hierbei so ausgelegt, dass die digitale Abtastung des analogen Mischsignals aus dem Vorverstärker 19 synchron mit der Frequenz der Chopperscheibe 10 erfolgt. Durch die synchrone Abtastung werden Signalschwebungen vermieden und die Genauigkeit der Signalverarbeitung kann noch gesteigert werden. Allerdings ist hierbei dafür Sorge zu tragen, dass es nicht zu einer Verschiebung von Abtastfrequenz und Chopperscheibenfrequenz, einem sogenannten Jitter, kommen kann, da bereits minimale Verschiebungen der Frequenzen zu einer Signalverfälschung führen. Die weitere Verarbeitung des digitalen Mischsignals erfolgt im Lock-in-Verstärker 21 und den nachfolgenden Bausteinen der elektronischen Signalverarbeitung 18 wie oben beschrieben.

## Patentansprüche

1. Verfahren zur Messung der optischen Absorption von Proben, bei dem Licht einer Strahlungsquelle (1) auf eine zu untersuchende Probe und auf eine Referenzprobe gelenkt wird,
das die zu untersuchende Probe transmittierende Licht mit einer ersten Frequenz und
das die Referenzprobe transmittierende Licht mit einer zweiten Frequenz moduliert wird,
die von der zu untersuchenden Probe und der Referenzprobe transmittierte Strahlungsintensität mittels eines fotoelektrischen Wandlers (8) in ein elektrisches Mischsignal umgesetzt und von einem an den fotoelektrischen Wandler (8) angeschlossenen Vorverstärker (19) verstärkt wird, **dadurch gekennzeichnet, dass**
das verstärkte elektrische Mischsignal in einem Analog-Digital Wandler (20) in ein digitales Mischsignal umgesetzt wird,
das digitale Mischsignal unter Anwendung eines digitalen Lock-in-Verstärkers (21) nach der ersten Frequenz in ein der zu untersuchenden Probe zugeordnetes Messsignal und nach der zweiten Frequenz in ein der Referenzprobe zugeordnetes Referenzsignal getrennt wird, indem aus dem Mischsignal durch Vergleich mit der dem Referenzsignal unterlagerten Sinusfrequenz die Phasenlage und Frequenz des dem Referenzsignal entsprechenden Signalanteils definiert und aus Phasenlage und Frequenz des Referenzsignals die Phasenlage und Frequenz des dem Messsignal entsprechenden Signalanteils des Mischsignals abgeleitet wird und
der Quotient aus dem Referenzsignal im Zähler und dem Messsignal im Nenner als Maß für die Konzentration der zu untersuchenden Probe gebildet wird, so dass die Verringerung der Strahlungsintensität durch Absorption zu einer Erhöhung der Empfindlichkeit führt.

2. Verfahren nach Anspruch 1, **dadurch gekennzeichnet, dass** bei der Digitalisierung eine asynchrone Abtastfrequenz verwendet wird.

3. Verfahren nach Anspruch 1, **dadurch gekennzeichnet, dass** die erste und die zweite Frequenz mittels einer Chopperscheibe (10) moduliert werden und die digitale Abtastung des analogen Mischsignals synchron zur Frequenz der Chopperscheibe (10) erfolgt.

4. Verfahren nach einem der vorhergehenden Ansprüche, **dadurch gekennzeichnet, dass** temperaturbedingte Einflüsse auf das Messsignal und das Referenzsignal für jedes der beiden Signale getrennt ausgeglichen werden.

5. Verfahren nach einem der Ansprüche 1 bis 3, **dadurch gekennzeichnet, dass** temperaturbedingte Einflüsse auf das Messsignal und das Referenzsignal in einem Normierungsglied für beide Signale gemeinsam ausgeglichen werden.

6. Verfahren nach einem der vorhergehenden Ansprüche, **dadurch gekennzeichnet, dass** bei einer Messung mit Nullgas auf der Probenseite das Messsignal durch einen variablen Korrekturfaktor der Auswerteschaltung derart eingestellt wird, dass der Quotient aus Referenzsignal und Messsignal gleich eins ist.

7. Vorrichtung zur Messung der optischen Absorption von Proben mit einer Lichtquelle (1),
einem photoelektrischen Wandler (8), der ein analoges elektrisches Mischsignal erzeugt,
einem zwischen Lichtquelle (1) und Wandler (8) verlaufenden Messstrahlengang zum Anordnen einer zu untersuchenden Probe,
einem zwischen Lichtquelle (1) und Wandler (8) verlaufenden Referenzstrahlengang zum Anordnen einer Referenzprobe,
einer motorgetriebenen Chopperscheibe (10) mit einer ersten Anzahl nur den Messstrahlengang freigebenden ersten Öffnungen (15) und einer zweiten Anzahl nur den Referenzstrahlengang freigebenden zweiten Öffnungen (16),
einem an den Wandler (8) angeschlossenen Vorverstärker (19),
**gekennzeichnet durch**
einen an den Vorverstärker (19) angeschlossenen Analog-Digital-Wandler (20), der das analoge elektrische Mischsignal in ein digitales elektrisches Mischsignal umwandelt,
einen an den Ausgang des Analog-Digital-Wandlers (20) angeschlossenen digitalen Lock-in-Verstärker (21), **durch** den das digitale elektrische Mischsignal nach der ersten Frequenz in ein der zu untersuchenden Probe zugeordnetes Messsignal, das der von dem Wandler (8) erfassten transmittierten Intensität des Messstrahlengangs entspricht, und nach der zweiten Frequenz in ein der Referenzprobe zugeordnetes Referenzsignal, das der von dem Wandler (8) erfassten transmittierten Intensität des Referenzstrahlengangs entspricht, getrennt wird, indem aus dem Mischsignal **durch** Vergleich mit der dem Referenzsignal unterlagerten Sinusfrequenz die Phasenlage und Frequenz des dem Referenzsignal entsprechenden Signalanteils definiert und aus Phasenlage und Frequenz des Referenzsignals die Phasenlage und Frequenz des dem Messsignal entsprechenden Signalanteils des Mischsignals abgeleitet wird, und
eine Auswerteschaltung (26) zur Bildung des Quotienten aus dem Referenzsignal im Zähler und dem Messsignal im Nenner als Maß für die Konzentration der Probe.

8. Vorrichtung nach Anspruch 7, **dadurch gekennzeichnet, dass** der AnalogDigital-Wandler (20) an eine Synchronisiereinrichtung (17) zur Synchronisation der digitalen Abtastung des analogen Mischsignals mit der Chopperscheibe (10) angeschlossen ist.

9. Vorrichtung nach einem der Ansprüche 7 oder 8, **gekennzeichnet durch** eine Einrichtung zur getrennten oder gemeinsamen Kompensation von Temperaturfehlern von Referenzsignal und Messsignal.

10. Vorrichtung nach einem der Ansprüche 7 bis 9, **dadurch gekennzeichnet, dass** die Auswerteschaltung (26) zur Kompensation von Druckunterschieden und/oder Querempfindlichkeit und/oder zur weiteren Linearisierung und/oder Temperaturverrechnung im Ausschlag eingerichtet ist.

11. Vorrichtung nach einem der Ansprüche 7 bis 10, **gekennzeichnet durch** eine Einrichtung zur Anzeige (27) und/oder Weiterleitung der ermittelten Konzentration der Probe.

## Claims

1. Method for measuring the optical absorption of samples, wherein light from a radiation source (1) is directed at a sample to be examined and at a reference sample,
the light transmitting the sample to be examined is modulated with a first frequency and
the light transmitting the reference sample is modulated with a second frequency,
the radiation intensity transmitted from the sample to be examined and the reference sample is converted into an electrical mixed signal via a photoelectric converter (8) and is increased by a preamplifier (19) that is connected to the photoelectric converter (8), **characterized in that** the increased electrical mixed signal is converted into a digital mixed signal in an analogue-to-digital converter (20),
the digital mixed signal is separated, with regard to the first frequency, into a measurement signal associated with the sample to be examined and, with regard to the second frequency, into a reference signal associated with the reference sample using a digital lock-in amplifier (21) by defining the phase position and frequency of the signal portion corresponding to the reference signal from the mixed signal by comparison with the sine frequency underlying the reference signal, and by deducting the phase position and frequency of the signal portion of the mixed signal corresponding to the measurement signal from the phase position and frequency of the reference signal, and
the quotient is formed from the reference signal and the measurement signal as a measurement for the concentration of the sample to be examined so that the reduction in the intensity of the radiation due to absorption leads to an increase in sensitivity.

2. Method according to claim 1, **characterised in that** an asynchronous sampling frequency is used during digitalisation.

3. Method according to claim 1, **characterised in that** the first and the second frequency are modulated by means of a chopper disc (10) and the digital sampling of the analogue mixed signal is carried out synchronously with the frequency of the chopper disc (10).

4. Method according to any one of the preceding claims, **characterised in that** the temperature-dependent influences on the measurement signal and the reference signal are balanced out separately for each of the two signals

5. Method according to any one of claims 1 to 3, **characterised in that** temperature-dependent influences on the measurement signal and the reference signal are balanced out together for both signals in a normalisation element.

6. Method according to any one of the preceding claims, **characterised in that** when measuring the sample face using zero test gas the measurement signal is adjusted via a variable correction factor of the evaluation circuit in such a way that the quotient of the reference signal and measurement signal is one.

7. Apparatus for measuring the optical absorption of samples comprising:
a light source (1),
a photoelectric converter (8) generating an analogue electrical mixed signal,
a measurement beam path arranged between the light source (1) and the converter (8), in which path the sample to be examined is arranged,
a reference beam path arranged between the light source (1) and the converter (8), in which path a reference sample is arranged,
a motor-driven chopper disc (10) with a first number of first openings (15) unblocking only the path for the measurement beam and a second number of second opening (16) unblocking only the path for the reference beam,
a preamplifier (19) connected to the converter (8),
**characterised by**
an analogue-to-digital converter (20) connected to the preamplifier (19) which converter (20) converts the analogue electrical mixed signal into a digital electrical mixed signal,
a digital lock-in amplifier (21) connected to the output of the analogue-to-digital converter (20) by which amplifier the digital electrical mixed signal is separated, with regard to the first frequency, into a measurement signal associated with the sample to be examined and corresponding to the transmitted radiation intensity of the measurement beam path detected by the converter (8), and, with regard to the second frequency, into a reference signal associated with the reference sample and corresponding to the transmitted intensity of the reference beam path by defining the phase position and frequency of the signal portion corresponding to the reference signal from the mixed signal by comparison with the sine frequency underlying the reference signal, and by deducting the phase position and frequency of the signal portion of the mixed signal corresponding to the measurement signal from the phase position and frequency of the reference signal, and
an evaluation circuit (26) for forming the quotient from the reference signal in the numerator and the measurement signal in the denominator as a measurement for the concentration of the sample.

8. Device according to claim 7, **characterised in that** the analogue-to-digital converter (20) is connected to a synchronisation device (17) for synchronising the digital scanning of the analogue mixed signal with the chopper disc (10).

9. Device according to either claim 7 or claim 8, **characterised by** a device for compensating, separately or together, for temperature errors of the reference and measurement signals.

10. Device according to any one of claims 7 to 9, **characterised in that** the evaluation circuit (26) is configured so as to compensate for differences in pressure and/or cross-sensitivity and/or so as to further linearise and/or offset temperature in the deflection.

11. Device according to any one of claims 7 to 10, **characterised by** a device for displaying (27) and/or transmitting the ascertained concentration of the sample.

## Revendications

1. Procédé de mesure de l'absorption optique d'échantillons, dans lequel la lumière d'une source de rayonnement (1) est dirigée sur un échantillon à étudier et sur un échantillon de référence,
la lumière traversant l'échantillon à étudier est modulée à une première fréquence et
la lumière traversant l'échantillon de référence est modulée à une seconde fréquence, l'intensité de rayonnement transmise par l'échantillon à étudier et par l'échantillon de référence est convertie au moyen d'un convertisseur photoélectrique (8) en un signal combiné électrique et amplifiée par un préamplificateur (19) connecté au convertisseur photoélectrique (8),
**caractérisé en ce que**
le signal combiné électrique amplifié est converti dans un convertisseur analogique-numérique (20) en un signal combiné numérique,
le signal combiné numérique est séparé au moyen d'un amplificateur à détection synchrone (21) selon la première fréquence en un signal de mesure associé à l'échantillon à étudier et selon la seconde fréquence en un signal de référence associé à l'échantillon de référence, en définissant la position de phase et la fréquence de la composante de signal correspondant au signal de référence à partir du signal combiné par comparaison à la fréquence sinusoïdale secondaire au signal de référence, et en déduisant de la position de phase et de la fréquence du signal de référence la position de phase et la fréquence de la composante de signal du signal combiné correspondant au signal de mesure et
le quotient du signal de référence dans le numérateur par le signal de mesure dans le dénominateur est formé comme mesure de la concentration de l'échantillon à étudier, de sorte que la diminution de l'intensité par absorption entraîne une augmentation de la sensibilité.

2. Procédé selon la revendication 1, **caractérisé en ce qu'**une fréquence de balayage asynchrone est utilisée lors de la conversion numérique.

3. Procédé selon la revendication 1, **caractérisé en ce que** la première et la seconde fréquence sont modulées au moyen d'un disque chopper (10) et le balayage numérique du signal combiné analogique s'effectue en synchronisme avec la fréquence du disque chopper (10).

4. Procédé selon l'une des revendications précédentes, **caractérisé en ce que** les influences dues à la température sur le signal de mesure et le signal de référence sont compensées séparément pour chacun des deux signaux.

5. Procédé selon l'une des revendications 1 à 3, **caractérisé en ce que** les influences dues à la température sur le signal de mesure et le signal de référence sont compensées conjointement pour les deux signaux dans un organe de normalisation.

6. Procédé selon l'une des revendications précédentes, **caractérisé en ce que** lors d'une mesure au moyen d'un gaz de zéro du côté de l'échantillon, le signal de mesure est ajusté à l'aide d'un facteur de correction variable du montage d'interprétation, de telle sorte que le quotient du signal de référence par le signal de mesure est égal à un.

7. Dispositif de mesure de l'absorption optique d'échantillons, comprenant une source de lumière (1),
un convertisseur photoélectrique (8) qui produit un signal combiné électrique analogique, un chemin optique de mesure circulant entre la source de lumière (1) et le convertisseur (8) pour disposer l'échantillon à étudier,
un chemin optique de référence circulant entre la source de lumière (1) et le convertisseur (8) pour disposer un échantillon de référence,
un disque chopper (10) entraîné par moteur et pourvu d'un premier nombre de premières ouvertures (15) ne libérant que le chemin optique de mesure et d'un second nombre de secondes ouvertures (16) ne libérant que le chemin optique de référence,
un préamplificateur (19) connecté au convertisseur (8),
**caractérisé par**
un convertisseur analogique-numérique (20) connecté au préamplificateur (19) qui convertit le signal combiné électrique analogique en un signal combiné électrique numérique,
un amplificateur à détection synchrone (21) connecté à la sortie du convertisseur analogique-numérique (20), par l'intermédiaire duquel le signal combiné électrique numérique est séparé selon la première fréquence en un signal de mesure associé à l'échantillon à étudier et correspondant à l'intensité transmise du chemin optique de mesure détectée par le convertisseur (8), et selon la seconde fréquence, en un signal de référence associé à l'échantillon de référence et correspondant à l'intensité transmise du chemin optique de référence détectée par le convertisseur (8), en définissant la position de phase et la fréquence de la composante de signal correspondant au signal de référence à partir du signal combiné par comparaison à la fréquence sinusoïdale secondaire au signal de référence, et en déduisant de la position de phase et de la fréquence du signal de référence la position de phase et la fréquence de la composante de signal du signal combiné correspondant au signal de mesure et
un montage d'interprétation (26) pour former le quotient du signal de référence dans le numérateur par le signal de mesure dans le dénominateur comme mesure de la concentration de l'échantillon.

8. Dispositif selon la revendication 7, **caractérisé en ce que** le convertisseur analogique-numérique (20) est connecté à un dispositif de synchronisation (17) destiné à la synchronisation du balayage numérique du signal combiné analogique au moyen du disque chopper (10).

9. Dispositif selon l'une des revendications 7 ou 8, **caractérisé par** un dispositif pour la compensation séparée ou commune des erreurs dues à la température du signal de référence et du signal de mesure.

10. Dispositif selon l'une des revendications 7 à 9, **caractérisé en ce que** le montage d'interprétation (26) est conçu pour compenser les différences de pression et/ou la sensibilité croisée et/ou pour une linéarisation supplémentaire et/ou une compensation de la température dans la déviation.

11. Dispositif selon l'une des revendications 7 à 10, **caractérisé par** un dispositif d'affichage (27) et/ou de transmission de la concentration déterminée de l'échantillon.
